# EUROPEAN PATENT APPLICATION

(11) **EP 2 560 401 A2**
(43) Date of publication of application: **20.02.2013**
(21) Application number: 11769089.1
(22) Date of filing: 14.04.2011
(51) Int. Cl.: H04N 21/236, H04N 21/435

(54) **METHOD FOR PROVIDING A WIDGET SERVICE STREAMING THROUGH A BROADCAST NETWORK, AND APPARATUS FOR SAME**

(30) Priority: 14.04.2010 US 324019 P
(71) Applicant: Samsung Electronics Co., Ltd, Gyeonggi-do 443-742 (KR)
(72) Inventor: HWANG, Sung-Oh, Yongin-si Gyeonggi-do 448-712 (KR); PARK, Kyung-Mo, Seoul 135-969 (KR); RYU, Young-Sun, Seongnam-si Gyeonggi-do 463-763 (KR); SONG, Jae-Yeon, Seoul 135-080 (KR)
(74) Representative: Hutter, Jacobus Johannes
(86) International application number: PCT/KR2011/002655
(87) International publication number: WO 2011/129623

(57) **Abstract**

A method and apparatus for providing a widget service in a digital TV (DTV). The DTV automatically installs a corresponding widget in a broadcast streaming service received through a broadcast network, in which widget information and widget installation information associated with a current broadcast program are included, and accordingly, a user may conveniently install a widget associated with the current broadcast program only by viewing the current broadcast program and use an optimized broadcast service by combining the widget service and a broadcast service.

## Description

### TECHNICAL FIELD

The present invention relates to a method and apparatus for providing a widget service through a broadcast network based on a Moving Picture Experts Group (MOEG) transmission system.

### BACKGROUND ART

In general, a method of using various content delivery services through a broadcast network by a user is largely classified into a non-real-time downloading method and a real-time streaming method.

According to the downloading method, digital media data desired by a user is previously downloaded from a server and stored in a client before a program start time, and a desired content service is used at a time desired by the user through the stored digital media data.

The streaming method includes a method of simultaneously delivering a plurality of content programs indicating services provided using various kinds of digital media data, such as broadcast, movie, and music data.

According to the streaming method, a user receives in real-time digital media data corresponding to a desired content program service and uses a desired content service through the digital media data. Thus, the streaming method is mainly used for content services corresponding to real-time broadcasts, such as relatively long media clips and sports broadcasting.

MPEG-2 Transport Stream (TS) mostly used as the streaming method is a transmission method designed to be suitable for broadcast networks, wherein multiplexing of digital media data to be transmitted is considered, and robustness against a digital media data transmission error is provided.

Recent digital TVs provide a widget service. Widgets are applications implemented in a small-sized icon form to display frequently used services on a screen without using a web browser. Through the widgets, a user may conveniently view news, the weather, a calendar, and so forth through a digital TV.

However, in a conventional streaming transmission method, a broadcast service and a widget service in a digital TV cannot be efficiently combined. In detail, since a conventional MPEG streaming transmission method is implemented by considering only acoustic and image data, a user must search for and install widgets using a network other than a broadcast network or an external interface, causing an annoying installation of widgets in a digital TV. In addition, since most widgets relate to general life information not associated with contents of broadcast programs provided in a streaming service, it is difficult for a user to use widgets by linking the widgets to broadcast programs for an optimized broadcast service.

### DETAILED DESCRIPTION OF THE INVENTION

### TECHNICAL PROBLEM

The present invention provides a method and apparatus for providing, through a broadcast network, widgets associated with a broadcast program provided in a streaming method.

### TECHNICAL SOLUTION

According to an aspect of the present invention, there is provided a method of processing signals in a digital broadcast receiving apparatus, the method including: extracting information about at least one widget associated with a current broadcast program from streaming data received through a broadcast network; installing the at least one widget in the digital broadcast receiving device on the basis of the extracted information; and executing the installed widget using input data included in streaming data of the current broadcast program.

The extracting may include extracting the information about the at least one widget from program specific information (PSI) data or packetized elementary stream (PES) data of an MPEG-2 TS packet.

The extracting may include extracting the information about the at least one widget from a moov box or an mdat box of an MPEG-4 file.

The installing may include: displaying a list of widgets associated with the current broadcast program on the basis of the extracted information; and downloading a widget selected by a user's input through the broadcast network or an Internet Protocol (IP) network on the basis of the extracted information.

The extracted information may include an identifier of a packet including installation data of the selected widget or an IP address of an external server supplying the installation data of the selected widget from among the streaming data of the current broadcast program.

The method may further include deleting the installed widget when the broadcast program ends.

The executing may include extracting the input data from PSI data or PES data of an MPEG-2 TS packet.

The executing may include extracting the input data from a moov box or an mdat box of an MPEG-4 file.

The information about the at least one widget may be periodically inserted into the streaming data of the current broadcast program.

According to another aspect of the present invention, there is provided a computer-readable recording medium storing a computer-readable program for executing the method.

According to another aspect of the present invention, there is provided an apparatus for processing digital broadcast signals, the apparatus including: a widget information extractor for extracting information about at least one widget associated with a current broadcast program from streaming data received through a broadcast network; a widget installation unit for installing the at least one widget in the apparatus on the basis of the extracted information; and a widget execution unit for executing the installed widget using input data included in streaming data of the current broadcast program.

The widget information extractor may extract the information about the at least one widget from program specific information (PSI) data or packetized elementary stream (PES) data of an MPEG-2 TS packet.

The widget information extractor may extract the information about the at least one widget from a moov box or an mdat box of an MPEG-4 file.

The widget installation unit may include: a widget list display unit for displaying a list of widgets associated with the current broadcast program on the basis of the extracted information; and a downloader for downloading a widget selected by a user's input through the broadcast network or an Internet Protocol (IP) network on the basis of the extracted information.

The extracted information may include an identifier of a packet including installation data of the selected widget or an IP address of an external server supplying the installation data of the selected widget from among the streaming data of the current broadcast program.

The apparatus may further include a widget deletion unit for deleting the installed widget when the broadcast program ends.

The widget information extractor may extract the input data from PSI data or PES data of an MPEG-2 TS packet.

The widget information extractor may extract the input data from a moov box or an mdat box of an MPEG-4 file.

The information about the at least one widget may be periodically inserted into the streaming data of the current broadcast program.

### ADVANTAGEOUS EFFECTS

### DESCRIPTION OF THE DRAWINGS

The above and other features and advantages of the present invention will become more apparent by describing in detail exemplary embodiments thereof with reference to the attached drawings in which:
FIG. 1 is a diagram for showing a concept of a widget streaming service according to an embodiment of the present invention;
FIG. 2 is an image of a display screen of a widget according to an embodiment of the present invention;
FIG. 3 is a block diagram for describing an MPEG streaming transmission method according to an embodiment of the present invention;
FIG. 4 is a flowchart for describing a method of providing a widget streaming service according to an embodiment of the present invention;
FIG. 5 is a flowchart for describing the method of FIG. 4 in more detail;
FIG. 6 is a signaling diagram for describing a method of providing a widget streaming service according to an embodiment of the present invention; and
FIG. 7 is a block diagram of an apparatus for providing a widget streaming service according to an embodiment of the present invention.

### BEST MODE

The present invention will now be described more fully with reference to the accompanying drawings, in which exemplary embodiments of the invention are shown.

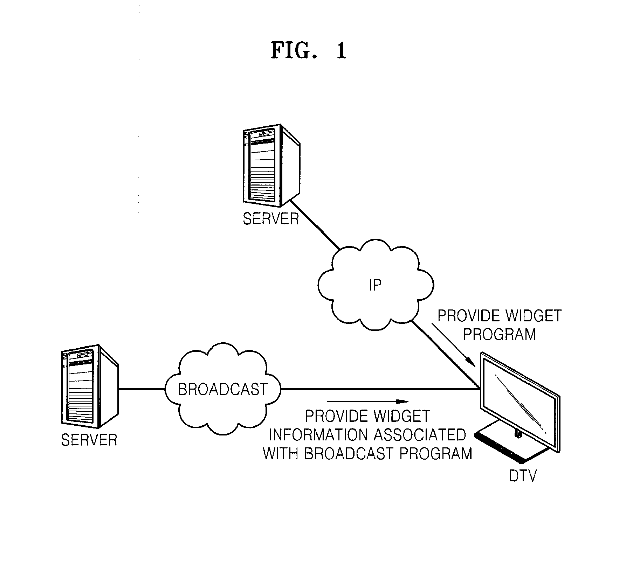

FIG. 1 is a diagram for showing a concept of a widget streaming service according to an embodiment of the present invention.

As shown in FIG. 1, according to the present invention, a digital TV (DTV) receives a broadcast service from a server connected to a broadcast network in a streaming method and also receives a widget service through the broadcast network. In detail, the DTV receives widget information associated with a corresponding broadcast program through streaming data of the corresponding broadcast program and installs a widget associated with a current broadcast program by receiving installation data of the widget (hereinafter, referred to as widget basic data) from a server connected to an Internet Protocol (IP) network on the basis of the received widget information. Input data required to execute the installed widget (hereinafter, referred to as widget input data) is also provided through the broadcast network, and the DTV updates the widget input data being executed in the DTV every time such data is detected from streaming data of a broadcast program.

As described above, since DTVs or set-top boxes supporting a service according to the present invention (hereinafter, referred to as a widget streaming service) must independently access the broadcast network and the IP network, each of the DTVs or set-top boxes preferably includes independent interfaces for two or more heterogeneous networks. However, the present invention is not limited thereto, and in some cases, the widget basic data and the widget input data may also be received through the broadcast network.

As described above, according to the present invention, a user may conveniently install a widget associated with a current broadcast program only by viewing the current broadcast program and may use an optimized broadcast service by combining a widget service and a broadcast service.

### MODE OF THE INVENTION

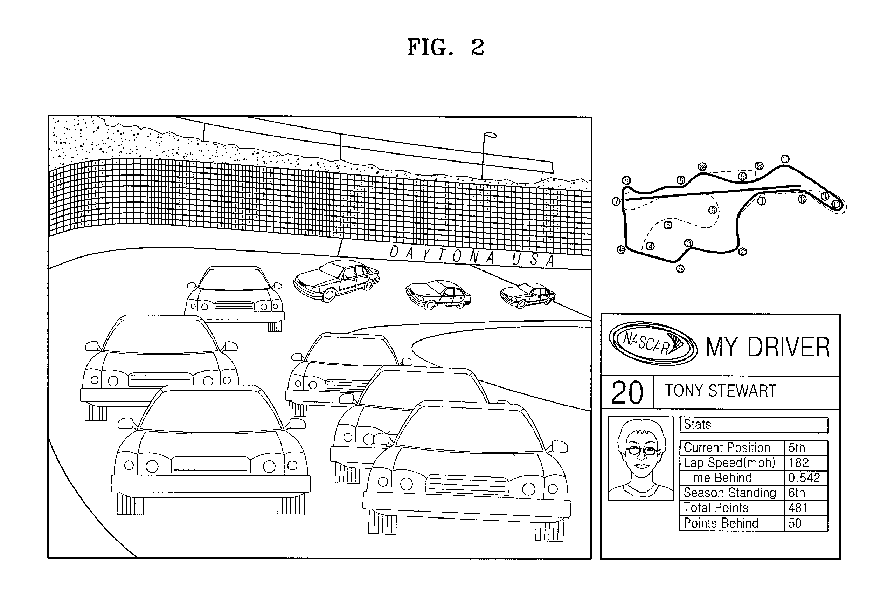

FIG. 2 is an image of a display screen of a widget according to an embodiment of the present invention.

As shown in FIG. 2, when a broadcast program for broadcasting a motor race is provided in a streaming method, a widget for providing information about racers participating in the racing may be used to optimize this broadcast service. That is, widget reference data is periodically included in streaming data of the broadcast program for broadcasting the motor race, and a DTV installs and executes the widget by receiving widget basic data through a broadcast network or an IP network on the basis of the widget reference data. Thereafter, every time widget input data included in streaming data is detected or every time widget input data is received in response to a user's request, the DTV updates input data of the widget being executed therein.

The widget input data may not be updated in response to a user's input or a command included in streaming data. In addition, the widget being executed may operate in a background without being displayed to the user, and the user may disable the widget being executed or delete the installed widget. In addition, the user may terminate the streaming widget service.

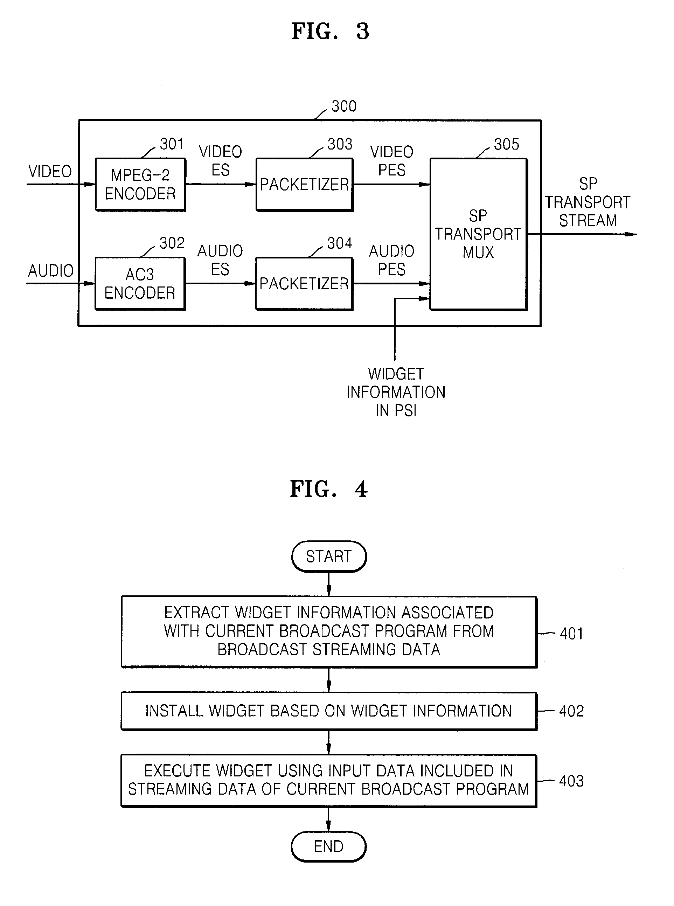

FIG. 3 is a block diagram for describing an MPEG streaming transmission method according to an embodiment of the present invention.

When a broadcast environment in which an additional feedback channel configuration is impossible is considered, a new digital media data configuration is required to provide a widget streaming service based on an existing streaming transmission method through a broadcast network. In the current embodiment, an encoder using an MPEG-2 method is illustrated.

As shown in FIG. 3, to provide a widget streaming service, an encoder 300 outputs a transport stream by encoding an image signal and an audio signal. In detail, the image signal is encoded to a video elementary stream (ES) by an MPEG-2 encoder 301, and the image ES is packetized to a video packetized elementary stream (PES) having a variable length by a packetizer 303.

The audio signal is encoded to an audio ES by an AC3 encoder 302, and the audio ES is packetized to an audio PES having a variable length by a packetizer 304.

The video PES and the audio PES are converted to transport stream (TS) packets, each TS packet having a length of 188 bytes, together with program specific information (PSI) by a multiplexer (MUX) 305 and is output as a single program (SP) transport stream including continuous TS packets.

The PSI is information required to extract and process corresponding broadcast program data from a TS by a DTV, the information including physical network information, a program identification number of a broadcast program, packet identifications (PIDs) of TS packets of audio/video, and so forth. PSI data according to an embodiment of the present invention includes widget information as shown in FIG. 3, thereby providing a widget streaming service to a user through a broadcast network. To provide the widget streaming service, widget reference data, widget basic data, and widget input data must be provided to the DTV.

The widget reference data includes information required to download the widget basic data. When the widget basic data is provided through the broadcast network, the information required to download the widget basic data may be a PID of a packet including the widget basic data, and when the widget basic data is provided through an Internet Protocol (IP) network, the information required to download the widget basic data may be an IP address of a server. In addition, the widget reference data may further include a widget service identifier indicating the presence of a widget service, a widget name, a widget producer and maker, a producing time, a version, security information, and so forth.

In addition, the widget reference data may further include information for accessing a widget store from which various widgets can be browsed and downloaded. The user may download various widgets associated with a specific broadcast program, a broadcast service provider, or a DTV manufacturer from the widget store.

The widget basic data is binary data required to actually install the widget and includes digital media data, such as audio and video, to display the widget on a user screen. The widget input data is used to update information about the widget already installed in the DTV or update input parameters required to execute the widget.

According to an embodiment of the present invention, the widget reference data and the widget input data may be included in the PSI data, and the widget basic data may be included in a PES packet. However, a streaming data structure proposed in the present invention is not limited thereto, and in some cases, all of the widget reference data, the widget basic data, and the widget input data may be included in the PSI data or the PES packet.

The widget streaming service may be based on a file format defined in an MPEG-4 standard. An MPEG-4 file is created based on a QuickTime file format and includes media data (mdat) and metadata (moov: movie metadata) having access and play information of the mdat. When the widget streaming service is provided based on an MPEG-4 file, the widget reference data may be transmitted by being carried on a moov box of the MPEG-4 file, and the widget basic data may be transmitted by being carried on an mdat box of the MPEG-4 file. However, the present invention is not limited thereto, and in some cases, all the widget data may be included in the moov box or the mdat box.

Since a time the user tunes a channel is arbitrary, it is preferable that the widget data is periodically inserted into streaming data, and a period of the widget data may depend on characteristics and services of a broadcast network through the widget data is transmitted.

According to an embodiment of the present invention, the DTV acquires widget basic data having a relatively long period by analyzing widget reference data having a relatively short period. If the widget basic data is extracted from a broadcast stream, the DTV automatically starts to install a corresponding widget. Alternatively, the widget may be manually installed by the user requesting for the widget basic data from a broadcast network server or an IP network server on the basis of a portion of the widget reference data before the widget basic data is completely extracted.

FIG. 4 is a flowchart for describing a method of providing a widget streaming service according to an embodiment of the present invention. A subject of the operations below may be a set-top box or DTV supporting the widget streaming service. Referring to FIG. 4, in operation 401, the DTV extracts widget information associated with a current broadcast program from broadcast streaming data. The widget information indicates widget reference data as described above.

In operation 402, the DTV installs a widget in the set-top box or DTV on the basis of the extracted widget information.

In operation 403, the DTV executes the installed widget. Input parameters required to execute the widget, i.e., widget input data, are extracted from streaming data of the current broadcast program. Even while the widget is being executed, the widget input data is updated using the streaming data.

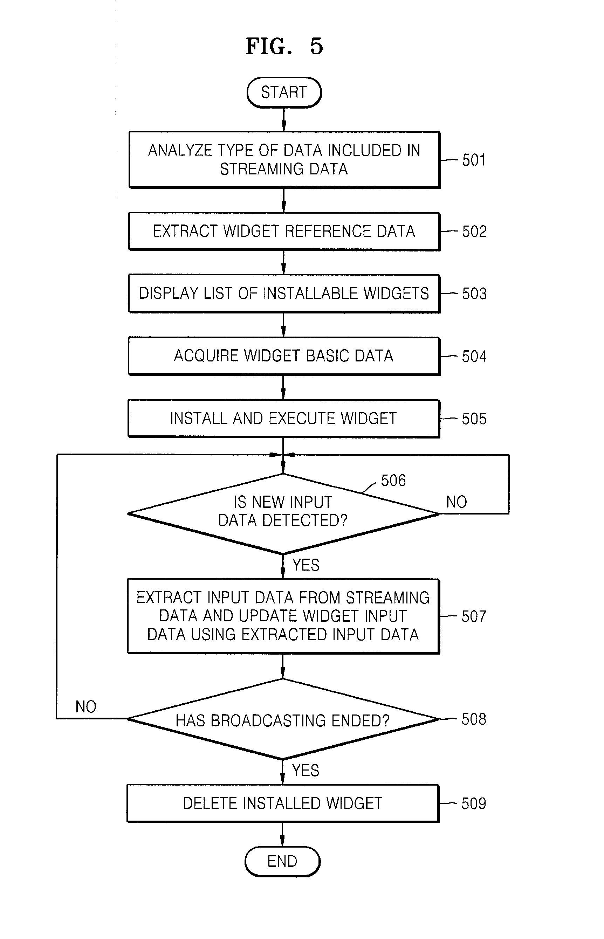

FIG. 5 is a flowchart for describing the method of FIG. 4 in more detail. In FIG. 5, an MPEG-2 based streaming service is assumed.

Referring to FIG. 5, in operation 501, the DTV analyzes a type of data included in broadcast streaming data on the basis of PSI. That is, it is determined which one of video information, audio information, and widget information is included in data included in a TS packet.

In operation 502, the DTV extracts widget reference data on the basis of the PSI. The widget reference data is extracted from PSI data or PES data of an MPEG-2 TS packet. When the widget streaming service is based on an MPEG-4 file, the widget reference data is extracted from a moov box or an mdat box of an MPEG-4 file.

As described above, the widget reference data includes information about a widget associated with a current broadcast program. The number of widgets associated with the current broadcast program may be plural.

In operation 503, the DTV displays a list of installable widgets, i.e., widgets associated with the current broadcast program. This list information is also included in the widget reference data.

In operation 504, the DTV acquires widget basic data required to install the widget on the basis of the widget reference data in response to a user input. The widget basic data may be extracted from streaming data of the current broadcast program or downloaded from an external server through an IP network.

When the widget basic data is acquired through a broadcast network, the widget basic data is extracted from the PSI data or the PES data of the MPEG-2 TS packet. When the widget streaming service is based on an MPEG-4 file, the widget basic data is extracted from the moov box or the mdat box of the MPEG-4 file.

In operation 505, the DTV installs and executes the widget on the basis of the acquired widget basic data. In this case, widget input data to be used is also extracted from the streaming data of the current broadcast program. In detail, the widget input data is extracted from the PSI data or the PES data of the MPEG-2 TS packet, and when the widget streaming service is based on an MPEG-4 file, the widget input data is extracted from the moov box or the mdat box of the MPEG-4 file. Alternatively, the widget input data may also be received from the external server connected to the IP network. In operation 506, the DTV determines whether new input data is detected from streaming data of the current broadcast program. If new input data is detected, the DTV extracts the new input data from the streaming data and updates the widget input data using the new input data in operation 507.

In operation 508, the DTV determines whether the current broadcast program has ended.

If the current broadcast program has ended, in operation 509, the DTV deletes the widget installed in operation 505. Alternatively, the DTV may disable the widget or ends the widget streaming service instead of deleting the widget if the current broadcast program has ended.

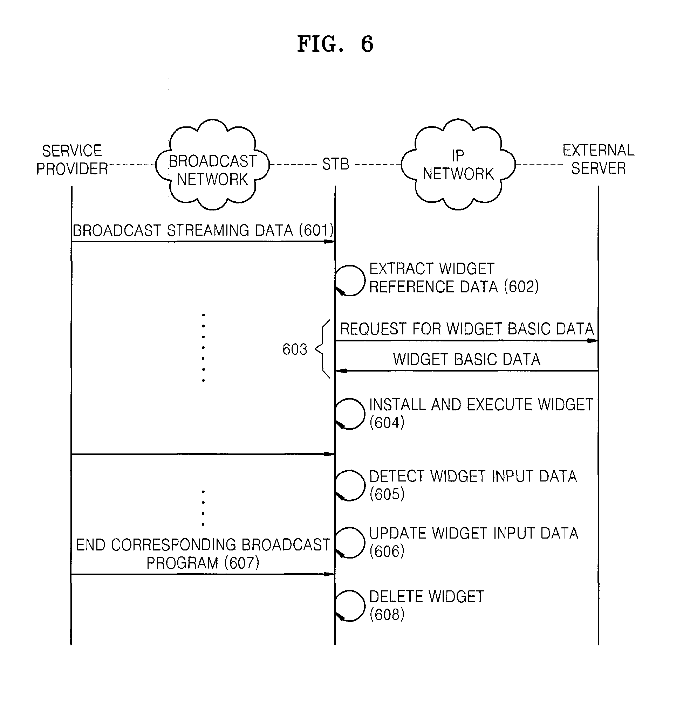

FIG. 6 is a signaling diagram for describing a method of providing a widget streaming service according to an embodiment of the present invention. In this embodiment, it is assumed that an apparatus for providing the widget streaming service is a set-top box (STB) instead of a DTV.

Referring to FIG. 6, in operation 601, a broadcast service provider transmits broadcast streaming data of a tuned channel to the STB.

In operation 602, the STB extracts widget reference data from the broadcast streaming data.

In operation 603, the STB downloads widget basic data from an external server through an IP network. That is, in the current embodiment, the widget basic data is downloaded from a server in the IP network instead of being extracted from the broadcast streaming data.

In operation 604, the STB installs and executes a widget in a DTV or the STB. Widget input data required to execute the widget is extracted from current broadcast streaming data.

In operation 605, the STB detects new widget input data from broadcast streaming data. In operation 606, the STB extracts the new widget input data from the broadcast streaming data and updates input parameters of the widget being executed using the extracted widget input data.

If a current broadcast program has ended in operation 607, the STB deletes the widget installed in association with the current broadcast program in operation 608.

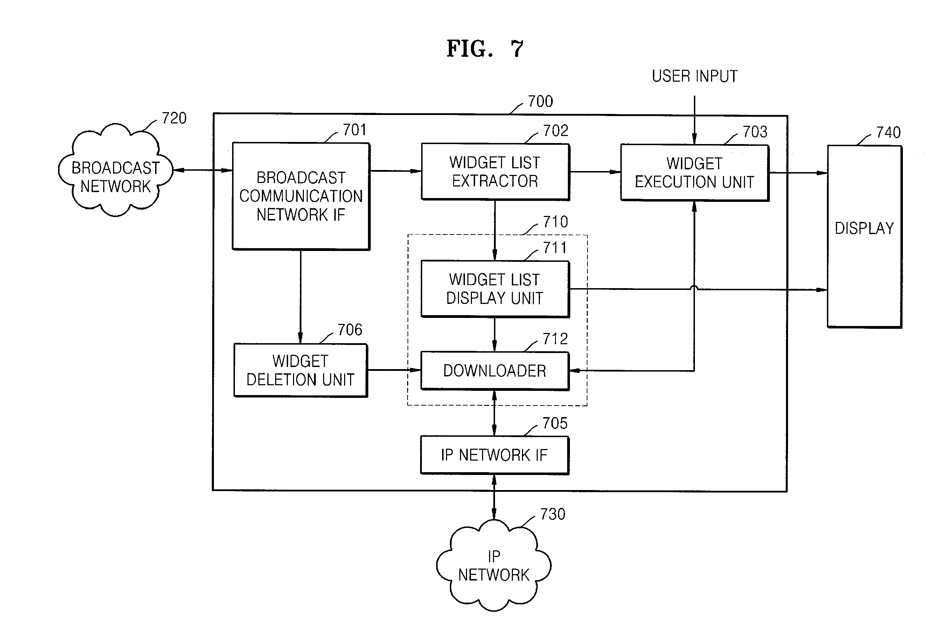

FIG. 7 is a block diagram of an apparatus 700 for providing a widget streaming service according to an embodiment of the present invention.

As shown in FIG. 7, the apparatus 700 includes a broadcast communication network interface (IF) 701, a widget information extractor 702, a widget execution unit 703, a widget installation unit 710, an IP network IF 705, and a widget deletion unit 706.

The widget information extractor 702 extracts widget reference data of a widget associated with a current broadcast program from streaming data received by the broadcast communication network interface IF 701 through a broadcast network 720. The widget information extractor 702 extracts the widget reference data from PSI data or PES data of an MPEG-2 packet. If the widget streaming service is based on an MPEG-4 file, the widget information extractor 702 extracts the widget reference data from a moov box or an mdat box of the MPEG-4 file.

The widget information extractor 702 extracts widget input data from the PSI data or the PES data of the MPEG-2 packet. If the widget streaming service is based on an MPEG-4 file, the widget information extractor 702 extracts the widget input data from the moov box or the mdat box of the MPEG-4 file.

The widget reference data is periodically inserted into broadcast streaming data.

The widget installation unit 710 installs a widget associated with the current broadcast program on the basis of the widget reference data. As shown in FIG. 7, the widget installation unit 710 includes a widget list display unit 711 and a downloader 712.

The widget list display unit 711 displays, on a display 740, a list of widgets associated with the current broadcast program on the basis of the widget reference data.

The downloader 712 receives all or some of the widgets associated with the current broadcast program through the broadcast network 720 or an IP network 730 in response to a user input. In this case, the widget reference data is used to download a widget, and more particularly, widget basic data, wherein the widget reference data includes an identifier of a packet including widget basic data of a widget selected from or an IP address of an external server supplying the widget basic data of the widget selected from streaming data of the current broadcast program.

The widget input data may be provided through the IP network 730 instead of the broadcast network 720, and in this case, the downloader 712 receives the widget input data from an external server (not shown) through the IP network IF 705.

The widget deletion unit 706 deletes the widget installed in association with the current broadcast program if the current broadcast program ends. Instead of deleting the widget, the widget may be disabled, or the widget streaming service may be terminated. The embodiments of the present invention can be written as computer programs and can be implemented in general-use digital computers that execute the programs using a computer-readable recording medium. Examples of the computer-readable recording medium include storage media such as magnetic storage media (e.g., ROM, floppy disks, hard disks, etc.), optical recording media (e.g., CD-ROMs, or DVDs), and carrier waves (e.g., transmission through the Internet).

While the present invention has been particularly shown and described with reference to exemplary embodiments thereof, it will be understood by those of ordinary skill in the art that various changes in form and details may be made therein without departing from the spirit and scope of the present invention as defined by the following claims. The exemplary embodiments should be considered in descriptive sense only and not for purposes of limitation. Therefore, the scope of the present invention is defined not by the detailed description of the present invention but by the appended claims, and all differences within the scope will be construed as being included in the present invention.

INDUSTRIAL APPLICABILITY

## Claims

1. A method of processing signals in a digital broadcast receiving apparatus, the method comprising:
extracting information about at least one widget associated with a current broadcast program from streaming data received through a broadcast network;
installing the at least one widget in the digital broadcast receiving device on the basis of the extracted information; and
executing the installed widget using input data included in streaming data of the current broadcast program.

2. The method of claim 1, wherein the extracting comprises extracting the information about the at least one widget from program specific information (PSI) data or packetized elementary stream (PES) data of an MPEG-2 transport stream (TS) packet.

3. The method of claim 1, wherein the extracting comprises extracting the information about the at least one widget from a moov box or an mdat box of an MPEG-4 file.

4. The method of claim 1, wherein the extracting comprises:
displaying a list of widgets associated with the current broadcast program on the basis of the extracted information; and
downloading a widget selected by a user's input through the broadcast network or an Internet Protocol (IP) network on the basis of the extracted information.

5. The method of claim 4, wherein the extracted information includes an identifier of a packet including installation data of the selected widget or an IP address of an external server supplying the installation data of the selected widget from among the streaming data of the current broadcast program.

6. The method of claim 1, further comprising deleting the installed widget when the broadcast program ends.

7. The method of claim 1, wherein the extracting comprises extracting the input data from PSI data or PES data of an MPEG-2 TS packet.

8. The method of claim 1, wherein the extracting comprises extracting the input data from a moov box or an mdat box of an MPEG-4 file.

9. The method of claim 1, wherein the information about the at least one widget is periodically inserted into the streaming data of the current broadcast program.

10. An apparatus for processing digital broadcast signals, the apparatus comprising:
a widget information extractor for extracting information about at least one widget associated with a current broadcast program from streaming data received through a broadcast network;
a widget installation unit for installing the at least one widget in the apparatus on the basis of the extracted information; and
a widget execution unit for executing the installed widget using input data included in streaming data of the current broadcast program.

11. The apparatus of claim 10, wherein the widget information extractor extracts the information about the at least one widget from program specific information (PSI) data or packetized elementary stream (PES) data of an MPEG-2 transport stream (TS) packet.

12. The apparatus of claim 10, wherein the widget information extractor extracts the information about the at least one widget from a moov box or an mdat box of an MPEG-4 file.

13. The apparatus of claim 10, wherein the widget information extractor comprises:
a widget list display unit for displaying a list of widgets associated with the current broadcast program on the basis of the extracted information; and
a downloader for downloading a widget selected by a user's input through the broadcast network or an Internet Protocol (IP) network on the basis of the extracted information.

14. The apparatus of claim 13, wherein the extracted information includes an identifier of a packet including installation data of the selected widget or an IP address of an external server supplying the installation data of the selected widget from among the streaming data of the current broadcast program.

15. The apparatus of claim 10, further comprising a widget deletion unit for deleting the installed widget when the broadcast program ends.

16. The apparatus of claim 10, wherein the widget information extractor extracts the input data from PSI data or PES data of an MPEG-2 TS packet.

17. The apparatus of claim 10, wherein the widget information extractor extracts the input data from a moov box or an mdat box of an MPEG-4 file.

18. The apparatus of claim 10, wherein the information about the at least one widget is periodically inserted into the streaming data of the current broadcast program.

19. A computer-readable recording medium storing a computer-readable program for executing the method of claim 1.
